# FASCICULE DE BREVET EUROPEEN

(11) **EP 2 724 518 B1**
(45) Date de publication et mention de la délivrance du brevet: **13.03.2019**
(21) Numéro de dépôt: 12738522.7
(22) Date de dépôt: 25.06.2012
(51) Int. Cl.: H04L 29/08, H04L 29/06

(54) **TRANSCODAGE D'UN CONTENU REFERENCE PAR UN SERVEUR DE CONTENUS**
TRANSKODIERUNG VON INHALT UNTER VERWEISUNG VON EINEM INHALTSERVER
TRANSCODING OF CONTENT REFERENCED BY A CONTENT SERVER

(30) Priorité: 24.06.2011 FR 1155590
(43) Date de publication de la demande: 30.04.2014
(73) Titulaire: Orange, 75015 Paris (FR)
(72) Inventeur: AGRO, Roberto, F-92340 Bourg La Reine (FR); VINCENT, Yoann, F-94230 Cachan (FR); GUAZZETTI, Manuel, F-78220 Viroflay (FR)
(86) Numéro de dépôt international: PCT/FR2012/051444
(87) Numéro de publication internationale: WO 2012/175895

(56) Documents cités:
- US-A1- 2007 078 959
- US-A1- 2008 043 834

## Description

L'invention concerne le domaine des serveurs de contenus numériques, et plus particulièrement, un procédé de transcodage d'un contenu référencé par un serveur de contenus ainsi qu'un système de transcodage associé.

Dans ce domaine, il existe des dispositifs de stockage à accès partagé, de type NAS (Network Attached Storage) par exemple, qui permette à un utilisateur de stocker des contenus numériques multimédias et de les mettre à disposition de différents équipements connectés au même réseau que le dispositif de stockage. Un tel dispositif de stockage intègre par exemple un serveur de contenus, conforme au standard UPnP et/ou DLNA, appelé "Digital Media Server" ou DMS dans ce standard.

Supposons en outre que l'utilisateur possède un téléviseur connecté à ce réseau, intégrant une entité UPnP / DLNA de type DMR (Digital Media Renderer). Cet utilisateur peut piloter ce DMR au moyen d'une entité UPnP / DLNA de type DMC (Digital Media Controller), mise en oeuvre sur un terminal de ce même réseau, afin de sélectionner un ou des contenus du dispositif de stockage NAS à restituer par le DMR.

Cependant, un nombre très réduit de codecs dans le standard DLNA étant obligatoires, il n'est pas garanti que le DMR supporte les codecs utilisés pour le codage des contenus à restituer et puisse restituer ces contenus.

La compatibilité des codecs est ainsi aujourd'hui un inconvénient majeur au sein de DLNA et est au centre des principales critiques formulées sur le standard. Il existe néanmoins des DMS avec des fonctions de transcodage de format, comme par exemple le Windows Media Player ® de Microsoft ® comme les serveurs média décrit pas la demande américaine US20070078959. Cette demande US20070078959 propose une passerelle jouant le rôle d'interface aux requêtes d'interrogation permettant une agrégation des réponses et une substitution des serveurs média en « low-power state » pour ces réponses relatives aux contenus susceptibles d'être obtenu auprès de ces serveurs média. Mais les contenus à restituer ne provenant pas nécessairement d'un tel DMS, il apparaît un besoin pour une solution de transcodage générique qui soit applicable quel que soit le DMS référençant le contenu à restituer.

La demande américaine US 2008/043834 décrit un transcodeur distinct du serveur média. Le transcodeur par la demande US 2008/043834 doit être interrogé séparément du serveur média pour obtenir les informations sur les formats des contenus disponibles. Cela impose de modifier chaque dispositif de restitution / point de contrôle UPnP qui interroge un serveur de contenus afin d'obtenir des informations sur d'autres formats de codage éventuellement disponibles pour ce contenu.

Un des buts de l'invention est de remédier à des problèmes, inconvénients ou insuffisances de l'état de la technique et/ou d'y apporter des améliorations.

L'invention concerne, selon un premier aspect, un procédé de transcodage d'un contenu référencé par un premier serveur de contenus connecté à un réseau, le procédé étant mis en oeuvre par un système de transcodage connecté au réseau et distinct du premier serveur de contenus et comprenant
- une étape d'émission, suite à une émission via le réseau d'un premier message d'annonce indiquant l'absence dans ledit réseau du premier serveur de contenus restant actif, d'un deuxième message d'annonce signalant la présence dans ledit réseau d'un dispositif de substitution dudit premier serveur de contenus, formant serveur de contenus, le dispositif de substitution étant implémenté dans le système de transcodage ;
- une étape de réception, en provenance d'une entité émettrice, d'une requête d'interrogation dudit dispositif de substitution;
- une étape de transfert de la requête d'interrogation du dispositif de substitution audit premier serveur de contenus, la requête d'interrogation visant à obtenir des métadonnées d'un contenu, dont au moins des métadonnées relatives aux formats de codage dans lequel le contenu est susceptible d'être obtenu ;
- une étape d'obtention d'une réponse dudit premier serveur de contenus comprenant des premières métadonnées relatives à au moins un premier format de codage dans lequel un contenu est susceptible d'être obtenu auprès dudit premier serveur de contenus,
- une étape d'analyse (B140) des premières métadonnées obtenues pour déterminer au moins un deuxième format de codage dans lequel le contenu est susceptible d'être obtenu et de génération de deuxièmes métadonnées relative au deuxième format de codage, le deuxième format de codage étant distinct du premier format de codage
- une étape d'envoi d'une réponse à l'entité émettrice comprenant les premières métadonnées et en outre des deuxièmes métadonnées relatives à au moins un deuxième format de codage dans lequel ledit contenu est susceptible d'être obtenu auprès dudit système de transcodage, le deuxième format de codage étant distinct du premier format de codage.

Selon l'invention, lorsqu'un serveur de contenus et un système de transcodage sont présents dans le réseau, le système de transcodage annonce la présence d'un dispositif de substitution jouant le rôle de serveur de contenus après que le serveur de contenus ait été déclaré absent du réseau.

L'invention propose ainsi un mécanisme de substitution d'un serveur de contenus par un dispositif faisant partie du système de transcodage, le serveur de contenus disparaissant au profit de ce dispositif. Ce dispositif est vu comme un serveur de contenus et se substitue à un serveur de contenus masqué. Un tel dispositif sera nommé par la suite dispositif de substitution.

En tant que serveur de contenus, le dispositif de substitution reçoit des requêtes d'interrogation concernant des contenus susceptibles d'être obtenus par son intermédiaire. Par ce biais, le dispositif de substitution peut fournir en réponse à ces requêtes d'interrogation des métadonnées complémentaires sur le ou les contenus du serveur de contenus substitué, pour indiquer qu'au moins un contenu référencé par ce serveur de contenus substitué est disponible sous un autre format de codage supplémentaire auprès du système de transcodage.

Le système de transcodage sert ainsi de serveur de transcodage pour les contenus hébergés par le ou les serveurs de contenus du réseau : chaque serveur de contenu du réseau peut être masqué à son profit, le système de transcodage pouvant alors systématiquement proposer, pour tous les contenus de tous les serveurs de contenus masqués, de nouveaux formats de codage qui ne seraient pas proposés par ces serveurs de contenus masqués.

En outre, dans l'hypothèse où un utilisateur acquiert et installe dans le réseau plusieurs serveurs de contenu, le système de transcodage est capable de déclarer plusieurs dispositifs de substitution en tant que serveur de contenu : chaque dispositif de substitution étant un composant logiciel instancié à la demande du système de transcodage, qui vient se substituer à un des serveurs de contenus pour proposer des formats de codage supplémentaires par rapport à ceux proposés par le serveur de contenus substitué.

Selon un mode de réalisation, le procédé de transcodage comprend une étape de déclenchement d'une exécution d'au moins une fonction de transcodage pour générer, à partir dudit contenu codé dans un dit premier format de codage, un contenu transcodé dans un dit deuxième format de codage. On économise ainsi des ressources, puisqu'il suffit de doter un seul équipement du réseau, en l'occurrence, le système de transcodage, de fonctions de transcodage.

Selon un mode de réalisation du procédé de transcodage, les deuxièmes métadonnées comprennent une deuxième adresse de localisation de fichier de données générée à partir d'une première adresse de localisation de fichier de données extraite des premières métadonnées. La deuxième adresse de localisation permet donc de faire le lien entre le contenu transcodé et le contenu source. Dans un cas particulier, cette deuxième adresse de localisation contient la première adresse de localisation.

Selon un mode de réalisation du procédé de transcodage, la deuxième adresse de localisation désigne le système de transcodage et/ou le dispositif de substitution comme entité auprès de laquelle ledit contenu est susceptible d'être obtenu dans ledit deuxième format de codage et la première adresse de localisation désigne le serveur de contenus comme entité auprès de laquelle ledit contenu est susceptible d'être obtenu dans ledit premier format de codage. Ainsi le système de transcodage et/ou le dispositif de substitution ne sera sollicité que pour l'accès aux contenus transcodés et non pour l'accès aux contenus ne nécessitant pas de transcodage. On évite ainsi une surcharge au niveau du dispositif de substitution et plus généralement, au niveau du système de transcodage intégrant le ou les dispositifs de substitution.

Selon un mode de réalisation, le procédé de transcodage comprend une étape de recherche d'un serveur de contenus présent dans ledit réseau et une étape d'émission d'une demande de masquage à destination d'au moins un serveur de contenus trouvé lors de l'étape de recherche, le premier message d'annonce étant émis par le premier serveur de contenus après réception d'une dite demande de masquage.

Dans ce mode de réalisation, le système de transcodage se charge lui-même de rechercher les serveurs de contenus présents dans le réseau. Il n'est pas nécessaire en particulier de faire intervenir une autre entité UPnP du réseau, comme par exemple un point de contrôle UPnP (« Control Point ») pour détecter la présence de serveurs de contenus dans le réseau. Si au moins un serveur de contenus est trouvé, une demande de masquage est envoyée pour provoquer l'envoi dudit premier message d'annonce.

Selon un mode de réalisation, le premier serveur de contenus est identifié par une adresse fixe et le procédé de transcodage comprend une étape d'émission d'une requête à au moins un serveur de contenus identifié par une adresse fixe, le premier message d'annonce étant émis par le premier serveur de contenus après réception d'une dite requête. Dans ce mode de réalisation, le serveur de contenus est préalablement identifié au moyen d'une adresse fixe. Il n'est donc pas nécessaire de mettre en oeuvre une phase préalable de recherche de serveur.

Selon un mode de réalisation du procédé de transcodage, le premier message d'annonce est émis par le système de transcodage suite à la réception d'un message d'annonce de la présence dans le réseau dudit serveur de contenus. Dans ce mode de réalisation, aucune phase de recherche n'est nécessaire. Il n'est en outre pas nécessaire de modifier le serveur de contenus puisqu'il est déclaré absent par une autre entité, en l'occurrence par le système de transcodage.

Selon un mode de réalisation, le procédé de transcodage comprend une étape d'émission à travers un réseau d'un message concernant une description d'au moins un service mis en oeuvre par ledit dispositif de substitution, ladite description incluant la description du ou des services mis en oeuvre par ledit premier serveur de contenus.

Le dispositif de substitution se déclare comme proposant des services mis en oeuvre par le serveur de contenus substitué : les entités UPnP du réseau peuvent ainsi faire appel à ces services en passant par le dispositif de substitution tout en bénéficiant des fonctions de transcodage du système de transcodage. De manière simplifiée pour l'utilisateur, un seul équipement du réseau est utilisé pour le transcodage de contenus référencés par un ou plusieurs serveurs de contenus du réseau.

Selon un mode de réalisation, le procédé de transcodage comprend une étape de mise en oeuvre de moyens de détection de la disparition dudit premier serveur de contenus configurés pour détecter une absence de réception, pendant un intervalle de temps prédéfini, d'un message ou d'une réponse à un message signalant la présence dudit premier serveur de contenus.

De cette manière, en cas de disparition du serveur de contenus, le dispositif de substitution du système de transcodage se déclare également absent du réseau, afin qu'aucune entité UPnP du réseau ne tente d'accéder à des contenus qui ne sont plus accessibles du fait de cette disparition.

Les différents modes de réalisation mentionnés ci-dessus sont combinables entre eux pour la mise en oeuvre de l'invention.

L'invention concerne, selon un deuxième aspect, un système de transcodage configuré pour être connecté à un réseau dans lequel se trouve un premier serveur de contenus distinct du système de transcodage, comprenant
- un dispositif de substitution du premier serveur de contenus (DSS), formant serveur de contenus et transférant une requête d'interrogation audit premier serveur de contenus, la requête d'interrogation visant à obtenir des métadonnées d'un contenu, dont au moins des métadonnées relatives aux formats de codage dans lequel le contenu est susceptible d'être obtenu ;
- des moyens d'émission, suite à une émission via le réseau d'un premier message d'annonce indiquant l'absence dans ledit réseau du serveur de contenus restant actif, d'un deuxième message d'annonce signalant la présence dans ledit réseau du dispositif de substitution du premier serveur de contenus, formant serveur de contenus,
- des moyens de réception, en provenance d'une entité émettrice, d'une requête d'interrogation dudit dispositif de substitution;
- des moyens de transfert de la requête d'interrogation du dispositif de substitution audit premier serveur de contenus, la requête d'interrogation visant à obtenir des métadonnées d'un contenu, dont au moins des métadonnées relatives aux formats de codage dans lequel le contenu est susceptible d'être obtenu ;
- des moyens d'obtention d'une réponse dudit premier serveur de contenus comprenant des premières métadonnées relatives à au moins un premier format de codage dans lequel un contenu est susceptible d'être obtenu auprès dudit premier serveur de contenus,
- un module de transcodage générant un contenu encodé dans un deuxième format de codage à partir du contenu stocké dans le premier serveur de contenus et des deuxièmes métadonnées relative au deuxième format de codage, le deuxième format de codage étant distinct du premier format de codage ;
- des moyens d'envoi d'une réponse à l'entité émettrice comprenant les premières métadonnées et en outre des deuxièmes métadonnées relatives à au moins un deuxième format de codage dans lequel ledit contenu est susceptible d'être obtenu auprès dudit système de transcodage, le deuxième format de codage étant distinct du premier format de codage.

Les avantages énoncés pour le procédé selon l'invention sont transposables directement au système de transcodage selon l'invention.

Plus généralement, le système de transcodage selon l'invention comprend des moyens de mise en oeuvre des étapes du procédé selon l'invention.

Selon une implémentation préférée, les différentes étapes du procédé de transcodage selon l'invention sont mises en oeuvre par un logiciel ou programme d'ordinateur, ce logiciel comprenant des instructions logicielles destinées à être exécutées par un processeur de données d'un serveur de contenus et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'informations lisible par un processeur de données, et comportant des instructions d'un programme tel que mentionné ci-dessus. Le support d'informations peut être n'importe quelle entité ou dispositif capable de stocker le programme.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un premier mode de réalisation du procédé selon l'invention ;

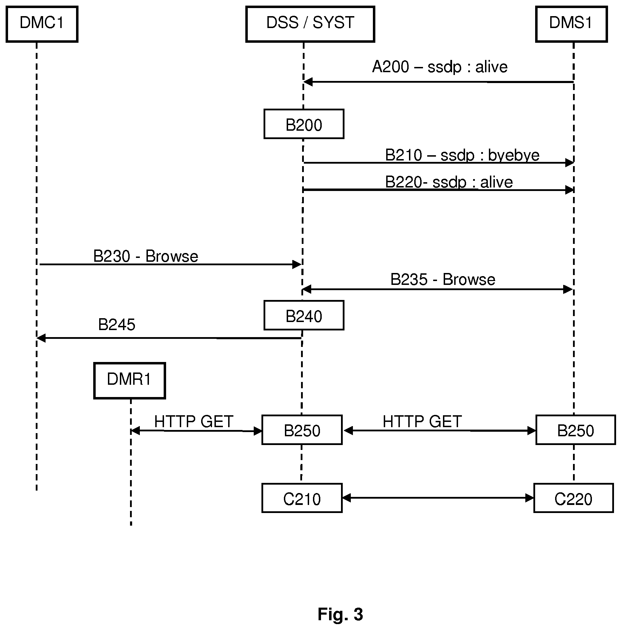

- la figure 3 représente un organigramme d'un deuxième mode de réalisation du procédé selon l'invention.

L'invention est décrite dans le cas de son application à des serveurs de contenus sous forme de serveurs de contenus conformes au standard UPnP et/ou DLNA, appelés "Digital Media Server" (DMS) dans un tel standard. Les contenus concernés sont des contenus numériques, par exemple des contenus multimédia: audio, vidéo, texte, etc.

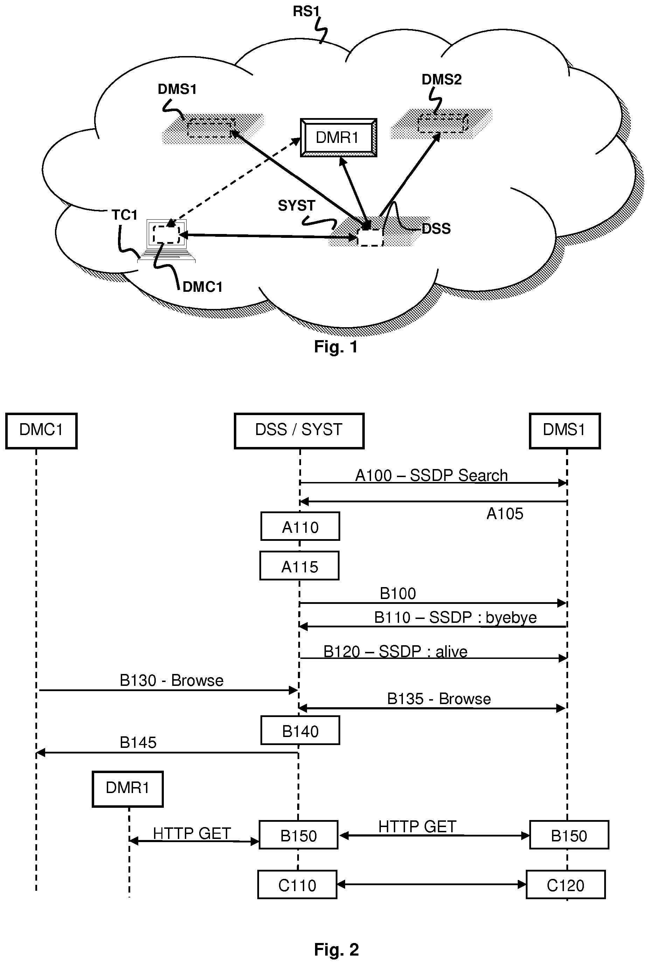

Le système représenté à la figure 1 est organisé autour d'un réseau de communication RS1, sous forme de réseau local (LAN, Local Area Network). Sont connectés à ce réseau :
- deux serveurs de contenus DMS1, DMS2, conformes au standard UPnP et/ou DLNA,
- un dispositif de restitution de contenus DMR1 (DMR, Digital Media Renderer), conforme au standard UPnP et/ou DLNA, intégré par exemple dans un équipement de type téléviseur ;
- un point de contrôle DMC1 (Control Point, CP ou Digital Media Controller, DMC), conforme au standard UPnP et/ou DLNA, intégré par exemple dans un terminal TC1 de type ordinateur personnel ;
- un système de transcodage SYST qui est capable de mettre en oeuvre un mécanisme de substitution pour un ou plusieurs serveurs de contenus connectés au même réseau que lui et de proposer des fonctions de transcodage pour les contenus référencés par ces serveurs de contenus.

Le mécanisme de substitution et de transcodage décrit dans ce document est toutefois applicable à des entités qui communiqueraient entre elles au moyen d'un protocole autre que celui protocole défini dans UPnP et/ou DLNA.

Le système de transcodage SYST comprend un module MR de recherche, au moins un dispositif de substitution DSS, un module MS de surveillance, au moins un module de transcodage, et un serveur de contenus SVR.

Le serveur de contenus SVR du système de transcodage SYST est un serveur de contenus conforme au standard UPnP et/ou DLNA, et peut donc être utilisé, indépendamment de la présence d'autres serveurs de contenus dans le réseau auquel il est connecté, pour référencer et/ou stocker des contenus. Dans l'exemple décrit ici, on suppose que le serveur de contenus SVR du système de transcodage SYST dispose de fonctions avancées par rapport aux serveurs de contenus DMS1 ou DMS2, ou bien d'une plus grande puissance de calcul.

Le module MR de recherche du système de transcodage SYST est configuré pour rechercher et détecter la présence de serveur de contenus au sein du réseau auquel est connecté le système de transcodage SYST, déterminer si un serveur de contenus trouvé est un serveur à substituer puis pour procéder au masquage du ou des serveurs de contenus détectés.

Le module MR de recherche sert en outre à instancier un dispositif de substitution DSS pour chaque serveur de contenus à substituer détecté. Le système de transcodage SYST est en effet capable de se substituer à un nombre quelconque de serveurs de contenus, sous réserve que l'équipement dans lequel ce système de transcodage est mis en oeuvre dispose de capacités de traitement (CPU, mémoire) suffisantes.

Dans ce but, le module MR de recherche instancie un dispositif de substitution DSS pour chaque serveur de contenus identifié comme étant à substituer.

Le dispositif de substitution DSS du système de transcodage SYST est un composant logiciel instancié dynamiquement, pour chaque serveur de contenus ayant été détecté par le module MR de recherche et identifié comme étant à substituer. Le dispositif de substitution DSS est configuré pour procéder au masquage d'un serveur de contenus à substituer puis pour se substituer à ce serveur de contenus en envoyant un message d'annonce signalant sa présence dans le réseau en tant que serveur de contenus présentant les mêmes services que ceux proposés par ce serveur de contenus masqué.

Le dispositif de substitution DSS reçoit alors des requêtes qui lui sont adressées mais qui concernent les contenus référencés par le serveur de contenus masqué et qui sont traitées avec la coopération de ce serveur de contenus masqué. Il s'agit de requêtes UPnP, qui sont émises et traitées conformément au standard UPnP ou de requêtes HTTP pour l'accès aux données d'un contenu.

Lorsqu'il s'agit d'une requête d'interrogation relatives à un ou des contenus référencés par un serveur de contenus masqué, par exemple une requête d'obtention de métadonnées, le dispositif de substitution DSS fait appel au serveur de contenus masqué pour obtenir des métadonnées concernant les contenus concernés.

Cependant, lorsque le dispositif de substitution DSS se substitue à un serveur de contenus présent dans le réseau, il enrichit les métadonnées, fournies par ce serveur de contenus, des contenus référencés et exposés par ce serveur de contenus masqué. Les métadonnées complémentaires concernent un ou des formats de codage supplémentaires dans lequel un contenu référencé par un serveur de contenus masqué est susceptible d'être obtenu auprès du système de transcodage SYST.

Le dispositif de substitution DSS met ainsi en oeuvre toutes les fonctions d'un serveur de contenus UPnP / DLNA, sauf en ce qui concerne le stockage de contenus. Le dispositif de substitution DSS présente notamment un service de répertoire (CDS, Content Directory Service) pour le référencement de contenus, mais ne stocke aucun contenu : en cas de requête d'accès à un contenu à transcoder, il obtient les données de ce contenu auprès du serveur de contenus masqué qui lui est associé et transcode les données de ce contenu à la volée, en faisant appel aux modules de transcodage du système de transcodage SYST.

Le module MS de surveillance du système de transcodage SYST est configuré pour détecter la disparition éventuelle d'un serveur de contenus masqué. Le module MS de surveillance sert à mettre fin à l'exécution du dispositif de substitution DSS qui s'est substitué au serveur de contenus dont la disparition a été détectée.

Outre les modules fonctionnels définis pour les serveurs de contenus dans le standard UPnP et/ou DLNA, le serveur de contenus DMS1 comprend un module de masquage MM, configuré pour procéder à l'auto-masquage du serveur de contenus DMS1 par envoi d'un message d'annonce déclarant le serveur de contenus DMS1 absent dudit réseau.

Cette opération de masquage s'effectue par exemple après avoir reçu en provenance du système de transcodage un message constituant une demande de masquage.

Deux modes de réalisation du procédé de transcodage sont décrits ci-dessous. Chacun de ces deux modes de réalisation comprend :
- une phase A de recherche et de détection d'au moins un serveur de contenus à substituer, à l'issue de laquelle le système de transcodage SYST est informé de la présence du serveur de contenus à substituer;
- une phase B de masquage et de substitution, lors de laquelle a lieu la substitution du serveur de contenus à substituer: le serveur de contenus est masqué, puis le dispositif de substitution DSS annonce sa présence dans le réseau; le dispositif de substitution DSS répond ensuite à des requêtes d'interrogation concernant des contenus référencés par le serveur de contenus masqué ;
- une phase C de surveillance, au cours de laquelle un dialogue est établi entre le serveur de contenus substitué et le système de transcodage afin de détecter la disparition de l'un ou de l'autre et de mettre fin au masquage et à la substitution.

### Premier mode de réalisation

Dans le premier mode de réalisation, le système de transcodage se charge de rechercher des serveurs de contenus présents dans le réseau RS1 et de déterminer ceux qui sont à substituer.

Dans ce but, le système de transcodage SYST utilise son module MR de recherche pour détecter la présence dans le réseau RS1 d'un serveur de contenus, en l'occurrence d'un serveur de contenus UPnP / DLNA ou DMS. Cette détection s'effectue au moyen de requêtes conformes au protocole SSDP (Simple Service Discovery Protocol).

### Phase A de recherche et de détection.

La phase de recherche, comprenant les étapes A100 à A120, est déclenchée à l'initialisation du système de transcodage SYST, après la connexion du système de transcodage SYST au réseau RS1.

A l'étape A100, le module MR de recherche émet en mode multicast via le réseau RS1 un message de recherche de serveur de contenus présent dans le réseau RS1: ce message de recherche est une requête SSDP "M-SEARCH". Le module MR de recherche se met ensuite à l'écoute des réponses à cette requête SSDP "M-SEARCH": ces réponses sont émises en mode unicast.

A l'étape A105, suite à l'interception de la requête SSDP "M-SEARCH", le serveur de contenus DMS1 envoie en mode unicast via le réseau RS1 un message de réponse qui comprend:
- un identifiant du serveur de contenus DMS1 (identifiant UUID, Universal Unique Identifier ou identifiant UDN, Unique Device Name) et
- une description du ou des services UPnP / DLNA mis en oeuvre par le serveur de contenus DMS1.

A l'étape A110, le module MR de recherche intercepte le message de réponse et identifie le serveur de contenus DMS1 à partir des informations contenues dans ce message de réponse.

Si le système de transcodage SYST est initialisé après le serveur de contenus DMS1, le serveur de contenus DMS1 répondra à la requête SSDP comme décrit ci-dessus.

Cependant si le système de transcodage SYST est initialisé avant le serveur de contenus DMS1, le module MR de recherche n'obtiendra pas de réponse à la requête SSDP "M-SEARCH". Dans ce cas, au moment où le serveur de contenus DMS1 sera initialisé, le module MR de recherche interceptera un message d'annonce SSDP "alive" que le serveur de contenus DMS1 doit envoyer, en mode multicast et de manière périodique, après sa connexion au réseau pour se conformer au mécanisme de découverte prévu dans le standard UPnP / DLNA.

En complément ou en alternative à la réception de message d'annonce SSDP "alive", le système de transcodage SYST envoie de manière périodique un message de recherche, afin de détecter la connexion au réseau RS1 de nouveaux serveurs de contenus.

A l'étape A115, le module MR de recherche détermine si le serveur de contenus DMS1 est un serveur à substituer. Les étapes des phases B et C décrites ci-dessous ne sont mises en oeuvre qu'en cas de réponse positive à cette étape de détermination.

Plusieurs variantes de réalisation sont possibles pour cette détermination.

Selon une première variante de réalisation de l'étape A115, tous les serveurs de contenus répondant à la requête SSDP "M-SEARCH" sont considérés comme des serveurs de contenus à substituer.

Selon une deuxième variante de réalisation de l'étape A115, la requête SSDP "M-SEARCH" émise à l'étape A100 comprend un paramètre "to be substituted" qui indique le type d'entité recherchée: en l'occurrence que le système de transcodage SYST recherche uniquement les serveurs de contenus à substituer et/ou configurés pour pouvoir être substitué. En conséquence, le module MR de recherche détermine à l'étape A115 qu'il s'agit d'un serveur de contenus qui répond à ce critère de recherche lorsqu'il reçoit une réponse à une requête SSDP "M-SEARCH" avec paramètre "to be substituted".

Le protocole SSDP permet en effet de rechercher des entités selon leur type (ici, le type est serveur de contenus) ou selon leur identifiant (UUID pour Universal Unique Identifier ou UDN pour Unique Device Name). Le paramètre "to be substituted" ainsi ajouté à la requête SSDP sera ignoré par les entités UPnP / DLNA de type DMC ou DMP mais sera interprété et exploité par le module MR de recherche.

Selon une troisième variante de réalisation de l'étape A115, cette détermination s'effectue à partir de la réponse à la requête SSDP "M-SEARCH", en déterminant si dans la description du serveur de contenus émettant cette réponse se trouve une propriété "to be substituted" qui indique que le serveur de contenus en question est un serveur de contenus à substituer et/ou configuré pour mettre en oeuvre cette substitution.

En pratique, la réponse à la requête SSDP "M-SEARCH" comprend un identifiant (UUID, Universal Unique Identifier ou UDN, Unique Device Name) du serveur de contenus DMS1 ayant répondu ainsi qu'un lien hypertexte (sous forme d'URL, Uniform Resource Locator) vers un fichier FDMS1 de description (au format XML) du serveur de contenus DMS1 et des services UPnP / DLNA mis en oeuvre par ce serveur de contenus DMS1: le module MR de recherche charge donc ce fichier et analyse le fichier pour y rechercher la propriété "to be substituted".

En alternative, au lieu de rechercher la propriété "to be substituted", le module MR de recherche analyse le fichier FDMS1 de description pour y rechercher si l'alias ("friendly name") du serveur de contenus et/ou le nom du modèle ("ModelName") du serveur de contenus et/ou le numéro du modèle ("ModelNumber") et/ou une autre propriété du serveur de contenus répond à un critère donné indiquant que le serveur de contenus peut être substitué par un système de transcodage. Dans cette alternative, il n'est pas nécessaire d'ajouter de propriété supplémentaire à la description d'un serveur de contenus pour identifier les serveurs de contenus à substituer.

### Phase B de masquage et de substitution.

La phase de recherche, comprenant les étapes B100 à B150, est déclenchée en cas de réponse positive obtenue à l'étape A115, c'est-à-dire dès lors qu'au moins un serveur de contenus à substituer a été trouvé.

A l'étape B100, le module MR de recherche instancie un dispositif de substitution DSS destiné à se substituer au serveur de contenus DMS1. Le module MR de recherche transmet au dispositif de substitution DSS un identifiant du serveur de contenus DMS1 masqué ainsi que le fichier de description FDMS1 obtenu pour le serveur de contenus DMS1 à masquer.

Puis, le dispositif de substitution DSS envoie, au serveur de contenus DMS1 trouvé lors de la phase A de recherche, une demande de masquage afin que le serveur de contenus DMS1 se déclare absent du réseau RS1. Cette demande de masquage est envoyée sous forme par exemple de requête UPnP ou bien de requête de type "web service".

A l'étape B110, à réception d'une telle demande de masquage en provenance du système de transcodage SYST, le module de masquage MM du serveur de contenus DMS1 envoie en mode multicast via le réseau RS1 une requête d'annonce de son départ du réseau, sous forme de requête SSDP "byebye". En outre, le serveur de contenus DMS1 désactive l'envoi en mode multicast de messages d'annonces SSDP "alive" qu'il est censé émettre périodiquement.

A l'étape B120, le système de transcodage SYST signale la présence dans ledit réseau d'un dispositif formant serveur de contenus : le dispositif de substitution DSS émet en mode multicast via le réseau RS1 un message d'annonce, sous forme de message SSDP "alive", signalant sa présence dans ce réseau en tant que serveur de contenus. Ce message d'annonce comprend un identifiant de dispositif affecté au dispositif de substitution DSS (identifiant UUID, Universal Unique Identifier ou identifiant UDN, Unique Device Name) ainsi qu'un lien hypertexte vers un fichier FADMS de description (au format XML) du dispositif de substitution DSS et des services UPnP / DLNA proposé par ce dispositif de substitution DSS. Cette description inclut une description du ou des services mis en oeuvre par le serveur de contenus DMS1 masqué : elle est générée à partir du fichier FDMS1 de description du serveur de contenus DMS1, dans lequel chaque URL associée à un service UPnP est modifiée de manière à pointer vers le dispositif de substitution DSS au lieu de pointer vers le serveur de contenus DMS1.

A l'étape B130, le dispositif de substitution DSS reçoit, en provenance du point de contrôle DMC1 ou d'une autre entité du réseau, une requête d'interrogation visant à obtenir des métadonnées d'un ou plusieurs contenus.

La requête d'interrogation est par exemple une requête UPnP de type "Browse" ou « Search ». La requête « Browse » permet d'obtenir des métadonnées d'un ensemble de contenus ou d'un contenu déterminé. La requête « Search » permet d'obtenir des métadonnées du ou des contenus répondant à des critères de recherche.

A l'étape B135, à réception de cette requête d'interrogation, le dispositif de substitution DSS transmet cette requête d'interrogation sans modification au serveur de contenus masqué qui lui est associé, c'est-à-dire, pour le cas d'exemple décrit ici, au serveur de contenus DMS1.

Puis le dispositif de substitution DSS obtient en retour une réponse de ce serveur de contenus masqués comprenant des métadonnées MT1 pour au moins un contenu. Pour chaque contenu concerné, ces métadonnées MT1 comprennent des métadonnées relatives à au moins un premier format de codage dans lequel ce contenu est susceptible d'être obtenu auprès du serveur de contenus masqué ayant envoyé la réponse. En particulier, ces métadonnées MT1 comprennent une identification et / ou description de chaque format de codage dans lequel ce contenu est susceptible d'être obtenu auprès de ce serveur de contenus masqué ainsi qu'une adresse de localisation (URI, Uniform Resource Identifier) d'un fichier de données contenant les données de ce contenu encodées selon ce format de codage. Cette adresse de localisation désigne le serveur de contenus DMS1 comme entité auprès de laquelle le contenu est susceptible d'être obtenu dans le format de codage considéré.

De manière connue, la description d'un format de codage d'un contenu audio comprend généralement les paramètres de codage suivant :
- l'algorithme de codage utilisé : MP3, WAV, etc
- la fréquence d'échantillonnage,
- le nombre de bits par échantillon,
- le nombre de voies audio.

De manière connue, la description d'un format de codage d'un contenu vidéo comprend généralement les paramètres de codage suivant :
- l'algorithme de codage utilisé : MPEG2, MPEG4, MWV, etc
- la résolution d'image,
- le nombre de bits par échantillon.

Par hypothèse ici, tout changement de l'un quelconque des paramètres de codage d'un contenu aboutit à un format de codage différent et nécessite une fonction de transcodage appropriée. Par exemple, un transcodage d'un contenu vidéo avec changement d'algorithme de codage et en outre un changement de résolution vidéo, nécessitera si besoin l'application successive de deux fonctions de transcodage de base : l'une pour effectuer le changement de résolution, l'autre pour effectuer le changement d'algorithme de codage.

En pratique, le système de transcodage SYST sera équipé d'une pluralité de modules de transcodage, chacun mettant en oeuvre une fonction de transcodage de base, plusieurs fonctions de transcodage de base pouvant ainsi être appliquées successivement à un même fichier de données pour obtenir un format de codage cible. Chaque dispositif de substitution DSS instancié au sein du système de transcodage peut ainsi faire appel à un ou plusieurs modules de transcodage.

A l'étape B140, le dispositif de substitution DSS analyse les métadonnées MT1 des réponses reçues pour déterminer, pour chaque contenu concerné par ces métadonnées si d'autres formats de codage peuvent être mis à disposition par transcodage d'un contenu encodé dans un premier format de codage disponible auprès du serveur de contenus masqué. Le dispositif de substitution DSS détermine dans ce but si le système de transcodage SYST dispose d'un ou de plusieurs modules de transcodage permettant, à partir d'un contenu encodé selon un des formats de codage indiqués dans ces métadonnées MT1, de générer un contenu encodé dans un autre format de codage qui n'est pas disponible pour ce contenu auprès du serveur de contenus masqué considéré.

Puis le dispositif de substitution DSS génère, pour chaque autre format de codage ainsi identifié, des métadonnées complémentaires MT2, relatives à cet autre format de codage dans lequel ce contenu est susceptible d'être obtenu auprès du système de transcodage SYST. Ces métadonnées complémentaires MT2 comprennent une identification et description de chaque autre format de codage dans lequel ce contenu est susceptible d'être obtenu ainsi qu'une adresse de localisation (URI, Uniform Resource Identifier) d'un fichier de données contenant les données de ce contenu encodées selon cet autre format de codage.

L'adresse de localisation URI2 générée pour cet autre format de codage est générée à partir de l'adresse de localisation URI1 du fichier de données source, c'est-à-dire du contenu tel que référencé et stocké par un serveur de contenus masqué, à partir duquel un contenu transcodé peut être généré par le système de transcodage SYST par application d'une fonction de transcodage. Ceci permettra, à réception d'une requête HTTP GET d'accès à un contenu, d'extraire l'adresse de localisation de ce fichier de données source et ensuite d'accéder simplement à ce fichier de données source.

En pratique, l'adresse de localisation URI2 inclut l'adresse de localisation URI1. Par exemple, si l'adresse de localisation URI1 du fichier de données source à transcoder est: http://192.168.1.10:10243/Kalimba.mp3
où 192.168.1.10 est l'adresse IP du serveur de contenus masqué mettant à disposition ce contenu, alors l'adresse de localisation du fichier de données transcodé pouvant être obtenu auprès du système de transcodage SYST sera de la forme : http://192.168.1.12:10243/Katimba.wma?source_uri=http://192.168.1.10:10243/Kalimba.mp3
où 192.168.1.12 est l'adresse IP du système de transcodage SYST auprès duquel ce contenu transcodé peut être obtenu.

Les annexes 1 et 2 comportent un exemple de métadonnées au format XML pour un même contenu audio :
- l'annexe 1 contenant les métadonnées d'un contenu audio, disponible dans un premier format (« MP3 ») auprès d'un serveur de contenus ;
- l'annexe 2 contenant les métadonnées de ce même contenu audio, enrichies avec les métadonnées décrivant une ressource complémentaire, correspondant à un deuxième format (« WAV ») dans lequel ce même contenu audio est disponible auprès du système de transcodage.

Dans l'annexe 2, il apparaît ainsi des métadonnées supplémentaires par rapport à celle de l'annexe 1.

Dans le standard UPnP / DLNA, chaque format de codage disponible pour un contenu est défini et décrit dans les métadonnées de ce contenu par un objet nommé « ressource». Les métadonnées d'un contenu contiennent ainsi, pour chaque format de codage disponible, un sous-ensemble de métadonnées décrivant les ressources associées à ce format de codage : adresse de localisation du fichier de données, identification et description du format de codage avec un ensemble de paramètres de codage.

En pratique, pour chaque autre format de codage disponible par transcodage d'un contenu référencé dans un serveur de contenus masqué, il est prévu d'ajouter dans les métadonnées du contenu considéré un sous-ensemble de métadonnées définissant une nouvelle ressource, associée à cet autre format de codage. Ce sous-ensemble de métadonnées comprend notamment une adresse de localisation propre à cet autre format de codage. Cette nouvelle ressource est identifié par une balise « res » dans les métadonnées au format XML, comme illustré dans les annexes 1 et 2.

Les annexes 3 et 4 illustrent un cas d'exemple pour un contenu image, dont le fichier source est un fichier encodé en JPEG avec une résolution de 1024 par 768 pixels, et les fichiers disponibles par transcodage sont encodés en JPEG avec une résolution 160 par 120 pixels, respectivement 640 par 480 pixels. Dans ce cas-ci, l'algorithme de codage (JPEG) est identique pour tous les fichiers disponibles, seule la résolution d'image changeant d'un fichier à l'autre.

A l'étape B145, le dispositif de substitution DSS génère une réponse à la requête d'interrogation reçue à l'étape B130. Cette réponse comprend :
- les métadonnées MT1 fournies par le serveur de contenus masqué associé au dispositif de substitution DSS pour chaque contenu qui est concerné par la requête d'interrogation et qui est référencé par ce serveur de contenus masqué;
- les métadonnées supplémentaires MT2 générées à l'étape B140.

Puis le dispositif de substitution DSS envoie la réponse ainsi générée à l'entité émettrice de la requête d'interrogation, en l'occurrence au point de contrôle DMC1.

Au final, pour un même contenu disponible sous plusieurs formats de codage (avec ou sans transcodage par le système de transcodage SYST), une adresse de localisation, propre à chaque format de codage dans lequel le contenu est susceptible d'être obtenu, est présente dans les métadonnées MT1, MT2 de ce contenu qui sont envoyées à l'étape B145.

Par exemple pour un contenu audio, se trouve dans les métadonnées :
- une URL pour obtenir le contenu au format MP3,
- une autre URL pour obtenir le contenu au format AAC.

Il est à noter ici que le point de contrôle DMC1 qui reçoit les métadonnées traite de la même manière les différentes métadonnées MT1, MT2 reçues, sans distinction quant au serveur de contenus d'où proviennent ces métadonnées.

Par contre, l'adresse de localisation contenue dans ces métadonnées permet de faire cette distinction. En effet, l'adresse de localisation désigne comme entité auprès de laquelle le contenu correspondant est susceptible d'être obtenu :
- pour les métadonnées MT2 : le système de transcodage SYST, puisqu'il s'agit dans ce cas d'un contenu encodé dans un format de codage susceptible d'être généré par un module de transcodage du système de transcodage SYST à partir d'un contenu stocké dans un serveur de contenus masqué et encodé dans un autre format; sinon
- pour les métadonnées MT1 : le serveur de contenus masqué, puisqu'il s'agit dans ce cas d'un contenu référencé ou stocké dans ce serveur de contenus masqué.

Ainsi en cas d'émission par une entité du réseau d'une requête (HTTP GET) d'accès à un contenu au moyen d'une de ces adresses de localisation, cette requête sera routée vers l'entité désignée dans cette adresse de localisation.

En pratique, lorsque l'entité en question est un serveur de contenus masqué, la requête HTTP GET d'accès parvient directement à ce serveur de contenus masqué, sans passer par l'intermédiaire du système de transcodage. Aucune opération n'est donc nécessaire au niveau du système de transcodage SYST.

Lorsque l'entité en question est le système de transcodage SYST et que le contenu demandé est référencé par un serveur de contenus masqué, le dispositif de substitution DSS est conçu pour, lors d'une étape B150, suite à la réception en provenance d'une entité (par exemple, le dispositif de restitution DMR1) d'une requête HTTP GET d'accès à un contenu:
- extraire de l'adresse de localisation contenue dans cette requête HTTP l'adresse de localisation du contenu source à transcoder,
- extraire de l'adresse de localisation contenue dans cette requête HTTP une identification du format de codage requis,
- obtenir, par émission d'une requête HTTP GET, auprès du serveur de contenus masqué, les données de ce contenu source,
- déclencher une exécution d'au moins une fonction de transcodage du système de transcodage pour générer, à partir dudit contenu source reçu, codé dans un premier format de codage, le contenu transcodé requis, dans un deuxième format de codage,
- et enfin envoyer le contenu ainsi transcodé à l'entité requérant le contenu.

Le serveur de contenus masqué est ainsi mis à contribution pour fournir les données des contenus qu'il référence et/ou stocke, le dispositif de substitution DSS se chargeant de faire l'interface avec les autres entités du réseau, notamment avec les entités UPnP.

### Phase C de surveillance.

Les étapes C110 et C120 suivantes sont exécutées en parallèle, l'une par le module de surveillance MS du système de transcodage SYST et l'autre par le module de surveillance MS1 du serveur de contenus DMS1.

A l'étape C110, le module de surveillance MS du système de transcodage SYST met en oeuvre un processus de surveillance afin de détecter la disparition du serveur de contenus DMS1. Cette détection consiste à détecter une absence de réception, pendant un intervalle de temps prédéfini, d'un message ou d'une réponse à un message signalant la présence du serveur de contenus DMS1.

Dans ce but, le module de surveillance MS du système de transcodage SYST s'abonne auprès du serveur de contenus DMS1 à des événements de présence, à envoyer en mode unicast sous forme de messages d'annonce SSDP "alive".

Le serveur de contenus DMS1 est configuré pour émettre périodiquement de tels messages d'annonces via le réseau RS1. Mais au lieu d'envoyer ces messages d'annonce en mode multicast, ces messages seront envoyés en mode unicast, à destination seulement du module de surveillance MS du système de transcodage SYST: ainsi le serveur de contenus DMS1 reste masqué pour toutes les entités UPnP du réseau RS1 mais signale sa présence au système de transcodage SYST, afin que ce dernier soit en mesure de détecter la disparition du serveur de contenus DMS1. En effet, l'équipement mettant en oeuvre le serveur de contenus DMS1 peut être éteint électriquement par un utilisateur ou mis en veille. Il est donc nécessaire que le système de transcodage SYST puisse détecter la disparition du serveur de contenus DMS1, c'est-à-dire sa déconnexion du réseau RS1.

Le module de surveillance MS met en oeuvre une fonction de détection de cette disparition, et détecte :
- soit une absence de réception, pendant un intervalle de temps prédéfini, correspondant à la périodicité d'émission des messages d'annonces en mode unicast, d'un message d'annonce SSDP "alive" signalant la présence du serveur de contenus DMS1; et
- soit la réception d'un message d'annonce SSDP "byebye" signalant la disparition du serveur de contenus DMS1.

Sur détection de la disparition d'un serveur de contenus, le module de surveillance MS met fin à l'exécution du dispositif de substitution DSS qui s'est substitué au serveur de contenus dont la disparition a été détectée : en l'occurrence il s'agit de la disparition du serveur de contenus DMS1. En recevant la demande de fin d'exécution du module de surveillance MS, le dispositif de substitution DSS envoie d'abord un message d'annonce de type SSDP « byebye » pour annoncer son départ du réseau : de cette manière les entités UPnP du réseau ne chercheront pas à faire appel au dispositif de substitution DSS inutilement. L'exécution du composant logiciel mettant en oeuvre le dispositif de substitution DSS est ensuite arrêtée.

A l'étape C120, le serveur de contenus DMS1 met en oeuvre un processus de surveillance afin de détecter la disparition du système de transcodage SYST. Ceci est nécessaire pour que le serveur de contenus puisse, suite à une telle disparition, être à nouveau utilisé directement par les entités de commandes UPnP du réseau RS1 (DMC et/ou DMP présents) et que les contenus référencés par le serveur de contenus DMS1 soient rendus accessibles.

Dans ce but, le serveur de contenus DMS1 comprend un module de surveillance MS1 configuré pour détecter des messages d'annonce, émis par le dispositif de substitution DSS. Plusieurs variantes de réalisation sont possibles.

Dans une première variante de réalisation de l'étape C120, les messages d'annonce détectés par le module de surveillance MS1 sont des messages d'annonce de départ, sous forme de messages SSDP de type « byebye », émis en mode multicast, qu'un dispositif UPnP doit émettre à sa déconnexion du réseau. Dans cette première variante, le serveur de contenus DMS1 détecte la disparition du dispositif de substitution DSS en cas d'émission d'un message d'annonce « byebye » émis en mode multicast par le dispositif de substitution DSS. Cette première variante n'est pas performante dans le cas où l'équipement incorporant le système de transcodage SYST est éteint électriquement sans avoir eu le temps d'envoyer de message d'annonce.

Dans une deuxième variante de réalisation de l'étape C120, les messages d'annonce détectés par le module de surveillance MS1 sont des messages d'annonce de présence, sous forme de messages SSDP de type « alive » qu'un dispositif UPnP émet à intervalle de temps périodique. Dans cette deuxième variante, si le dispositif de substitution DSS n'émet pas de message d'annonce « alive » pendant une durée déterminé, le serveur de contenus DMS1 détecte la disparition du dispositif de substitution DSS. Cette deuxième variante n'est pas performante dans le cas où l'intervalle de temps entre deux émissions de messages d'annonce est trop long : supérieur à 5 ou 10 minutes. En effet, les messages SSDP de type « alive » sont émis en général toutes les 10 ou 15 mn.

En effet, la détection de la disparition du dispositif de substitution DSS peut se produire avec plusieurs minutes de retard et les contenus du serveur de contenus DMS1 sont pendant ce temps inaccessibles.

Chacun de ces messages d'annonce peut ainsi être remplacé par un message d'appel d'une fonction d'un service Web mis en oeuvre par le serveur de contenus DMS1, qui peut alors détecter une absence d'appel de cette fonction.

Dans une troisième variante de réalisation de l'étape C120, les messages d'annonce détectés par le module de surveillance MS1 sont des messages de réponse, émis conformément à un autre protocole, en réponse à une requête émise périodiquement par le module de surveillance MS1 du serveur de contenus DMS1.

Après émission d'une telle requête, le module de surveillance MS1 déclenche une temporisation de courte durée, par exemple inférieure à 1 minute: si à l'expiration de cette temporisation, le module de surveillance MS1 n'a reçu aucun message de réponse à sa requête, il détecte la disparition du dispositif de substitution DSS. Cette troisième variante permet une détection rapide (à la minute près, si la temporisation est de 1 minute ou inférieure) de la disparition du dispositif de substitution DSS.

Lorsque le serveur de contenus DMS1 a détecté, selon l'une quelconque de ces trois variantes de réalisation de l'étape C120, la disparition du dispositif de substitution DSS, il émet à nouveau un message d'annonce SSDP « alive » en mode multicast pour signaler sa présence auprès des entités de commandes UPnP du réseau RS1 (DMC et/ou DMP présents. Ces entités peuvent alors piloter directement le serveur de contenus DMS1, sans passer par l'intermédiaire du système de transcodage SYST. Le serveur de contenus DMS1 réactive en outre l'émission périodique des messages d'annonce SSDP de type « alive ».

### Deuxième mode de réalisation

Dans le deuxième mode de réalisation, le système de transcodage masque systématiquement tous les serveurs de contenus qui se déclarent présents dans le réseau.

### Phase A de recherche et de détection.

Dans ce deuxième mode de réalisation, le serveur de contenus DMS1 ne possède pas de module MR1 de recherche.

La phase de recherche, comprenant les étapes A200 à A220, est déclenchée à l'initialisation du serveur de contenus DMS1, après la connexion du serveur de contenus DMS1 au réseau RS1.

A l'étape A200, le module MR de recherche du système de transcodage SYST détecte une émission dans le réseau d'un message d'annonce, sous forme de message SSDP « alive », de la présence dans le réseau d'un serveur de contenus. Un tel message d'annonce est émis par exemple par le serveur de contenus DMS1 lorsqu'il se connecte au réseau RS1.

### Phase B de masquage et de substitution.

La phase B de masquage et de substitution, comprenant les étapes B200 à B250, est déclenchée en cas de réception d'un message d'annonce SSDP « alive » en provenance d'un serveur de contenus connecté au réseau RS1.

Dans ce mode de réalisation de la phase B, le serveur de contenus DMS1 est masqué par le dispositif de substitution DSS. Aucune modification du serveur de contenus DMS1 par rapport à ce qui est défini dans le standard UPnP / DLNA n'est nécessaire : en particulier, aucun module de masquage n'est nécessaire pour le serveur de contenus DMS1.

A l'étape B200, le module MR de recherche du système de transcodage SYST reçoit un message d'annonce en provenance du serveur de contenus DMS1 par lequel celui-ci se déclare présent dans le réseau. Le module MR de recherche instancie alors un dispositif de substitution DSS destiné à se substitué au serveur de contenus DMS1. Le module MR de recherche transmet au dispositif de substitution DSS un identifiant du serveur de contenus DMS1 masqué ainsi que le fichier de description FDMS1 obtenu auprès du serveur de contenus DMS1 à masquer.

A l'étape B210, le dispositif de substitution DSS émet un message d'annonce, sous forme de message SSDP "byebye", pour déclarer le serveur de contenus DMS1 absent du réseau: ce message d'annonce utilise l'identifiant affecté au serveur de contenus DMS1, identifiant qui a été utilisé par ce même serveur de contenus DMS1 pour se déclarer présent. Pour les autres entités UPnP du réseau, ce serveur de contenus DMS1 est considéré dès lors comme ayant disparu du réseau. En outre, comme le serveur de contenus DMS1 doit envoyer périodiquement en mode multicast de messages d'annonces SSDP "alive", cet envoi de message d'annonce de disparition sera répété également périodiquement.

Les étapes B220 à B250 suivantes sont identiques aux étapes B120 à B150 respectivement.

### Phase C de surveillance.

La phase de surveillance, comprenant les étapes C210 et C220, est déclenchée en cas de réponse positive obtenue à l'étape A215. Ces étapes sont identiques respectivement aux étapes C100 et C120 décrites ci-dessus pour le premier mode de réalisation.

### Exemple d'application de l'invention.

A titre d'exemple, on suppose qu'un équipement du réseau RS1 est capable de diffuser des flux audiovisuels émis en mode « broadcast » (par exemple des flux conformes à la norme DVB-T) par l'intermédiaire d'un serveur de contenus DMS1 intégré dans cet équipement. Cet équipement possède des tuners DVB-T pour la captation des flux audiovisuels. Le serveur de contenus DMS1 référence une liste de chaînes de télévision dans son répertoire (CDS), à chaque chaîne (1 chaîne = 1 item du CDS) étant associée une URL permettant d'accéder au flux audiovisuel diffusé pour cette chaîne.

Tout équipement UPnP / DLNA compatible avec les formats audio et vidéo des flux DVB-T a la possibilité d'accéder à la liste des chaînes de télévision référencées par le serveur de contenus DMS1 et de restituer une des chaines sélectionnée dans cette liste.

Quand un autre équipement, intégrant un système de transcodage SYST selon l'invention, est connecté au réseau RS1, le mécanisme de substitution décrit dans ce document permettra de présenter à l'utilisateur les contenus du serveur de contenus DMS1 dans d'autres formats de codage que ceux proposés par ce serveur de contenus DMS1. Ceci se fait de manière transparente pour l'utilisateur, qui voit toujours un serveur de contenus, mis en oeuvre en l'occurrence par un dispositif de substitution du système de transcodage, via lequel il aura accès à ses contenus dans de nombreux formats de codage.

### Variantes de réalisation de l'invention.

La phase A de recherche peut en outre être supprimée si le serveur de contenus à substituer est préalablement identifié par une adresse IP fixe et que le système de transcodage ou le dispositif de substitution DSS envoie au démarrage une requête à un ou chaque serveur de contenus identifié par une adresse fixe pour déclencher l'opération de masquage de ce serveur de contenus, c'est-à-dire l'envoi par ce serveur de contenus d'un message d'annonce de sa disparition du réseau.

L'invention a été décrite dans le cas de l'utilisation du protocole SSDP pour la mise en oeuvre des phases A, B ou C. Tout autre protocole est toutefois utilisable : par exemple des envois de requêtes de type Web Service sont envisageables, à l'exception toutefois des étapes B110, B210, B120, B220 qui doivent utiliser des messages SSDP standardisé si l'on veut que des entités UPnP standardisées interprètent correctement les messages d'annonce émis lors de ces étapes et comprennent qu'il s'agit respectivement la disparition du serveur de contenus et l'apparition d'un dispositif de substitution DSS. Il en est de même pour la détection de la disparition du dispositif de substitution DSS ou du serveur de contenus dans la phase C.

### ANNEXE 1

```
      <item id="{4E6241CC-CD1D-4C69-8DA0-7053F8DD9D50}.0.4" restricted="0"
      parentID="4">
      <dc:title>Kalimba</dc:title>
      <dc:creator>Mr. Scruff</dc:creator>
      <res size="8414449" duration="0:05:48.000" bitrate="24000" protocolInfo="http-
      get:*:audio/mpeg:DLNA.ORG_PN=MP3;DLNA.ORG_OP=01;DLNA.ORG_FLAGS=0150000000
      0000000000000000000000" sampleFrequency="44100" bitsPerSample="16"
      nrAudioChannels="2">
      http://192.168.1.10:10243/Kalimba.mp3</res>
      <upnp:class>object.item.audioItem.musicTrack</upnp:class>
      <upnp:genre>Electronic</upnp:genre>
      <dc:publisher>Ninja Tune</dc:publisher>
      <upnp:artist role="AlbumArtist">Mr. Scruff</upnp:artist>
      <upnp:artist role="Performer">Mr. Scruff</upnp:artist>
      <upnp:author role="Composer">A. Carthy and A. Kingslow</upnp:author>
      <upnp:album>Ninja Tuna</upnp:album>
      <upnp:originalTrackNumber>1</upnp:originalTrackNumber>
      <dc:date>2008-01-02</dc:date>
      <upnp:actor>Mr. Scruff</upnp:actor>
      <upnp:albumArtURI dlna:profileID="JPEG_TN" xmlns:dlna="urn:schemas-dlna-
      org:metadata-1-0/">http://192.168.1.10:10243/Kalimba.jpg</upnp:albumArtURI>
      </item>
```

### ANNEXE 2

```
      <item id="{4E6241CC-CD1D-4C69-8DA0-7053F8DD9D50}.0.4" restricted="0"
      parentID="4">
      <dc:title>Kalimba</dc:title>
      <dc:creator>Mr. Scruff</dc:creator>
      <res size="8414449" duration="0:05:48.000" bitrate="24000" protocolInfo="http-
      get:*:audio/mpeg:DLNA.ORG_PN=MP3;DLNA.ORG_OP=01;DLNA.ORG_FLAGS=0150000000
      0000000000000000000000" sampleFrequency="44100" bitsPerSample="16"
      nrAudioChannels="2">
      http://192.168.1.10:10243/Kalimba.mp3</res>
      <res duration="0:05:48.000" bitrate="8000" protocolInfo="http-get:*:audio/x-ms-
      wma:DLNA.ORG_PN=WMABASE;DLNA.ORG_OP=10;DLNA.ORG_CI=1;DLNA.ORG_FLAGS
      =01500000000000000000000000000000" sampleFrequency="44100" nrAudioChannels="2" >
      http://192.168.1.12:10243/Kalimba.wma?source_uri=http://192.168.1.10:10243/Kali
      mba.mp3</res>
      <upnp:class>object.item.audioItem.musicTrack</upnp:class>
      <upnp:genre>Electronic</upnp:genre>
      <dc:publisher>Ninja Tune</dc:publisher>
      <upnp:artist role="AlbumArtist">Mr. Scruff</upnp:artist>
      <upnp:artist role="Performer">Mr. Scruff</upnp:artist>
      <upnp:author role="Composer">A. Carthy and A. Kingslow</upnp:author>
      <upnp:album>Ninja Tuna</upnp:album>
      <upnp:originalTrackNumber>1</upnp:originalTrackNumber>
      <dc:date>2008-01-02</dc:date>
      <upnp:actor>Mr. Scruff</upnp:actor>
      <upnp:albumArtURI dlna:profileID="JPEG_TN" xmlns:dlna="urn:schemas-dlna-
      org:metadata-1-0/">http://192.168.1.10:10243/Kalimba.jpg</upnp:albumArtURI>
      </item>
```

### ANNEXE 3

```
      <item id="{3E351A26-40FD-4333-93A8-DDD925F253FA}.O.B" restricted="0"
      parentID="B"><dc:title>Chrysanthemum</dc:title>
      <res size="879394" resolution="1024x768" protocolInfo="http-
      get:*:image/jpeg:DLNA.ORG_PN=JPEG_MED;DLNA.ORG_OP=01;DLNA.ORG_FLAGS=00d0
      0000000000000000000000000000"
      colorDepth="24">http://192.168.1.10:10243/Chrysanthemum.jpg</res>
      </item>
```

### ANNEXE 4

```
      <item id="{3E351A26-40FD-4333-93A8-DDD925F253FA}.0.B" restricted="0"
      parentID="B"><dc:title>Chrysanthemum</dc:title>
      <res size="879394" resolution="1024x768" protocolInfo="http-
      get:*:image/jpeg:DLNA.ORG_PN=JPEG_MED;DLNA.ORG_OP=01;DLNA.ORG_FLAGS=00d0
      0000000000000000000000000000"
      colorDepth="24">http://192.168.1.10:10243/Chrysanthemum.jpg</res>
      <res resolution="160x120" protocolInfo="http-
      get:*:image/jpeg:DLNA.ORG_PN=JPEG_TN;DLNA.ORG_OP=01;DLNA.ORG_CI=1;DLNA.OR
      G_FLAGS=00d00000000000000000000000000000"
      colorDepth="24">http://192.168.1.12:10243/Chrysanthemum2.jpg?source_uri=
      http://192.168.1.10:10243/Chrysanthemum.jpg</res>
      <res resolution="640x480" protocolInfo="http-
      get:*:image/jpeg:DLNA.ORG_PN=JPEG_SM;DLNA.ORG_OP=01;DLNA.ORG_CI=1;DLNA.OR
      G_FLAGS=00d00000000000000000000000000000"
      colorDepth="24">http://192.168.1.12:10243/Chrysanthemum3.jpg?source_uri=http://192.168.
      1.10:10243/Chrysanthemum.jpg</res>
      </item>
```

## Revendications

1. Procédé de transcodage d'un contenu référencé par un premier serveur de contenus (DMS1) connecté à un réseau, le procédé étant mis en oeuvre par un système de transcodage (SYST) connecté au réseau et distinct du premier serveur de contenus et comprenant :
- une étape d'émission (B120, B220), suite à une émission (B110, B210) via le réseau d'un premier message d'annonce signalant l'absence dans ledit réseau du premier serveur de contenus restant actif, d'un deuxième message d'annonce signalant la présence dans ledit réseau d'un dispositif de substitution du premier serveur de contenus (DSS), formant serveur de contenus, le dispositif de substitution étant implémenté dans le système de transcodage ;
- une étape de réception (B130, B230), en provenance d'une entité émettrice, d'une requête d'interrogation dudit dispositif de substitution (DSS),
- une étape de transfert (B135) de la requête d'interrogation du dispositif de substitution audit premier serveur de contenus, la requête d'interrogation visant à obtenir des métadonnées d'un contenu, dont au moins des métadonnées relatives aux formats de codage dans lequel le contenu est susceptible d'être obtenu ;
- une étape d'obtention (B135, B235) d'une réponse dudit premier serveur de contenus comprenant des premières métadonnées relatives à au moins un premier format de codage dans lequel ledit contenu est susceptible d'être obtenu auprès dudit premier serveur de contenus,
- une étape d'analyse (B140) des premières métadonnées obtenues pour déterminer au moins un deuxième format de codage dans lequel le contenu est susceptible d'être obtenu et de génération de deuxièmes métadonnées relative au deuxième format de codage, le deuxième format de codage étant distinct du premier format de codage ; et
- une étape d'envoi (B145, B245) d'une réponse à l'entité émettrice comprenant les premières métadonnées et en outre des deuxièmes métadonnées relatives à au moins un deuxième format de codage dans lequel ledit contenu est susceptible d'être obtenu auprès dudit système de transcodage.

2. Procédé selon la revendication 1 comprenant une étape (B150, B250) de déclenchement d'une exécution d'au moins une fonction de transcodage pour générer, à partir dudit contenu codé dans un dit premier format de codage, un contenu transcodé dans un dit deuxième format de codage.

3. Procédé selon la revendication 1 ou 2 dans lequel les deuxièmes métadonnées comprennent une deuxième adresse de localisation de fichier de données générée à partir d'une première adresse de localisation de fichier de données extraite des premières métadonnées.

4. Procédé selon la revendication 3 dans lequel la deuxième adresse de localisation désigne le système de transcodage comme entité auprès de laquelle ledit contenu est susceptible d'être obtenu dans ledit deuxième format de codage et la première adresse de localisation désigne le premier serveur de contenus comme entité auprès de laquelle ledit contenu est susceptible d'être obtenu dans ledit premier format de codage.

5. Procédé de transcodage selon la revendication 1, comprenant une étape (A100) de recherche d'un serveur de contenus présent dans ledit réseau et une étape (B100) d'émission d'une demande de masquage à destination d'au moins un serveur de contenus trouvé lors de l'étape de recherche, le premier message d'annonce étant émis par le premier serveur de contenus après réception d'une dite demande de masquage.

6. Procédé de transcodage selon la revendication 1, dans lequel le premier serveur de contenus est identifié par une adresse fixe, le procédé comprenant une étape d'émission d'une requête à au moins un serveur de contenus identifié par une adresse fixe, le premier message d'annonce étant émis par le premier serveur de contenus après réception d'une dite requête.

7. Procédé de transcodage selon la revendication 1, dans lequel le premier message d'annonce est émis par le système de transcodage suite à la réception (A200) d'un message d'annonce de la présence dans le réseau dudit premier serveur de contenus.

8. Procédé de transcodage selon la revendication 1, comprenant une étape d'émission (B120, B220) à travers un réseau d'un message concernant une description d'au moins un service mis en oeuvre par ledit dispositif de substitution, ladite description incluant une description du ou des services mis en oeuvre par ledit premier serveur de contenus.

9. Procédé de transcodage selon la revendication 1, comprenant une étape (C110, C210) de mise en oeuvre de moyens de détection de la disparition dudit premier serveur de contenus configurés pour détecter une absence de réception, pendant un intervalle de temps prédéfini, d'un message ou d'une réponse à un message signalant la présence du premier serveur de contenus.

10. Système de transcodage configuré pour être connecté à un réseau dans lequel se trouve un premier serveur de contenus distinct du système de transcodage, comprenant
- un dispositif de substitution du premier serveur de contenus (DSS), formant serveur de contenus ;
- des moyens d'émission, suite à une émission via le réseau d'un premier message d'annonce indiquant l'absence dans ledit réseau du premier serveur de contenus restant actif, d'un deuxième message d'annonce signalant la présence dans ledit réseau du dispositif de substitution dudit serveur (DSS), formant serveur de contenus,
- des moyens de réception, en provenance d'une entité émettrice, d'une requête d'interrogation dudit dispositif de substitution,
- des moyens de transfert de la requête d'interrogation du dispositif de substitution audit premier serveur de contenus, la requête d'interrogation visant à obtenir des métadonnées d'un contenu, dont au moins des métadonnées relatives aux formats de codage dans lequel le contenu est susceptible d'être obtenu ;
- des moyens d'obtention d'une réponse dudit premier serveur de contenus comprenant des premières métadonnées relatives à au moins un premier format de codage dans lequel un contenu est susceptible d'être obtenu auprès dudit premier serveur de contenus,
- un module de transcodage générant un contenu encodé dans un deuxième format de codage à partir du contenu stocké dans le premier serveur de contenus et des deuxièmes métadonnées relative au deuxième format de codage, le deuxième format de codage étant distinct du premier format de codage ;
- des moyens d'envoi d'une réponse à l'entité émettrice comprenant les premières métadonnées et en outre des deuxièmes métadonnées relatives à au moins un deuxième format de codage dans lequel ledit contenu est susceptible d'être obtenu auprès dudit système de transcodage.

## Patentansprüche

1. Transcodierverfahren eines von einem mit einem Netzwerk verbundenen ersten Inhaltsserver (DMS1) referenzierten Inhalts, wobei das Verfahren von einem mit dem Netzwerk verbundenen und sich vom ersten Inhaltsserver unterscheidenden Transcodiersystem (SYST) angewendet wird und enthält:
- einen Schritt (B120, B220) des Sendens, nach einem Senden (B110, B210) einer ersten Ankündigungsnachricht über das Netzwerk, die die Abwesenheit des aktiv bleibenden ersten Inhaltsservers im Netzwerk anzeigt, einer zweiten Ankündigungsnachricht, die das Vorhandensein einer einen Inhaltsserver bildenden Ersatzvorrichtung des ersten Inhaltsservers (DSS) im Netzwerk anzeigt, wobei die Ersatzvorrichtung in das Transcodiersystem implementiert ist;
- einen Schritt (B130, B230) des Empfangs einer von einer sendenden Entität kommenden Abfrageanforderung der Ersatzvorrichtung (DSS),
- einen Schritt (B135) der Übertragung der Abfrageanforderung von der Ersatzvorrichtung an den ersten Inhaltsserver, wobei die Abfrageanforderung darauf abzielt, Metadaten eines Inhalts zu erhalten, darunter mindestens Metadaten bezüglich der Codierformate, in denen der Inhalt erhalten werden kann;
- einen Schritt (B135, B235) des Erhalts einer Antwort des ersten Inhaltsservers, die erste Metadaten bezüglich mindestens eines ersten Codierformats enthält, in dem der Inhalt beim ersten Inhaltsserver erhalten werden kann,
- einen Schritt (B140) der Analyse der ersten erhaltenen Metadaten, um mindestens ein zweites Codierformat zu bestimmen, in dem der Inhalt erhalten werden kann, und der Erzeugung zweiter Metadaten bezüglich des zweiten Codierformats, wobei das zweite Codierformat sich vom ersten Codierformat unterscheidet, und
- einen Schritt (B145, B245) des Sendens einer Antwort an die sendende Entität, die die ersten Metadaten und außerdem zweite Metadaten bezüglich mindestens eines zweiten Codierformats enthält, in dem der Inhalt beim Transcodiersystem erhalten werden kann.

2. Verfahren nach Anspruch 1, das einen Schritt (B150, B250) des Auslösens einer Ausführung mindestens einer Transcodierfunktion enthält, um ausgehend vom in einem ersten Codierformat codierten Inhalt einen in ein zweites Codierformat transcodierten Inhalt zu generieren.

3. Verfahren nach Anspruch 1 oder 2, wobei die zweiten Metadaten eine zweite Dateilokalisierungsadresse enthalten, die ausgehend von einer ersten Dateilokalisierungsadresse generiert wird, die aus den ersten Metadaten entnommen wird.

4. Verfahren nach Anspruch 3, wobei die zweite Lokalisierungsadresse das Transcodiersystem als Entität bezeichnet, bei der der Inhalt im zweiten Codierformat erhalten werden kann, und die erste Lokalisierungsadresse den ersten Inhaltsserver als Entität bezeichnet, bei der der Inhalt im ersten Codierformat erhalten werden kann.

5. Transcodierverfahren nach Anspruch 1, das einen Schritt (A100) des Suchens eines im Netzwerk vorhandenen Inhaltsservers und einen Schritt (B100) des Sendens einer Maskierungsanforderung an mindestens einen im Suchschritt gefundenen Inhaltsserver enthält, wobei die erste Ankündigungsnachricht vom ersten Inhaltsserver nach Empfang einer Maskierungsanforderung gesendet wird.

6. Transcodierverfahren nach Anspruch 1, wobei der erste Inhaltsserver durch eine ortsfeste Adresse bezeichnet wird, wobei das Verfahren einen Schritt des Sendens einer Anforderung an mindestens einen durch eine ortsfeste Adresse bezeichneten Inhaltsserver enthält, wobei die erste Ankündigungsnachricht vom ersten Inhaltsserver nach Empfang einer Anforderung gesendet wird.

7. Transcodierverfahren nach Anspruch 1, wobei die erste Ankündigungsnachricht vom Transcodiersystem nach dem Empfang (A200) einer Ankündigungsnachricht des Vorhandenseins des ersten Inhaltsservers im Netzwerk gesendet wird.

8. Transcodierverfahren nach Anspruch 1, das einen Schritt (B120, B220) des Sendens einer Nachricht über ein Netzwerk enthält, die eine Beschreibung mindestens eines von der Ersatzvorrichtung verwendeten Diensts betrifft, wobei die Beschreibung eine Beschreibung des oder der vom ersten Inhaltsserver verwendeten Dienste umfasst.

9. Transcodierverfahren nach Anspruch 1, das einen Schritt (C110, C210) der Verwendung von Erfassungseinrichtungen des Verschwindens des ersten Inhaltsservers enthält, die konfiguriert sind, eine Abwesenheit eines Empfangs, während eines vordefinierten Zeitintervalls, einer Nachricht oder einer Antwort auf eine Nachricht zu erfassen, die das Vorhandensein des ersten Inhaltsservers anzeigt.

10. Transcodiersystem, das konfiguriert ist, mit einem Netzwerk verbunden zu werden, in dem sich ein erster Inhaltsserver befindet, der sich vom Transcodiersystem unterscheidet, das enthält
- eine Ersatzvorrichtung des ersten Inhaltsservers (DSS), die einen Inhaltsserver bildet;
- Einrichtungen zum Senden, nach einem Senden einer ersten Ankündigungsnachricht über das Netzwerk, die die Abwesenheit des ersten aktiv bleibenden Inhaltsservers im Netzwerk anzeigt, einer zweiten Ankündigungsnachricht, die das Vorhandensein der Ersatzvorrichtung des Servers (DSS) im Netzwerk anzeigt, die einen Inhaltsserver bildet,
- Einrichtungen zum Empfang einer von einer sendenden Entität kommenden Abfrageanforderung der Ersatzvorrichtung,
- Einrichtungen zur Übertragung der Abfrageanforderung von der Ersatzvorrichtung zum ersten Inhaltsserver, wobei die Abfrageanforderung darauf abzielt, Metadaten eines Inhalts zu erhalten, darunter mindestens Metadaten bezüglich der Codierformate, in denen der Inhalt erhalten werden kann;
- Einrichtungen zum Erhalt einer Antwort des ersten Inhaltsservers, die erste Metadaten bezüglich mindestens eines ersten Codierformats enthält, in dem ein Inhalt beim ersten Inhaltsserver erhalten werden kann,
- ein Transcodiermodul, das einen in einem zweiten Codierformat codierten Inhalt ausgehend von dem im ersten Inhaltsserver gespeicherten Inhalt und zweite Metadaten bezüglich des zweiten Codierformats generiert, wobei das zweite Codierformat sich vom ersten Codierformat unterscheidet;
- Sendeeinrichtungen einer Antwort an die sendende Entität, die die ersten Metadaten und außerdem zweite Metadaten bezüglich mindestens eines zweiten Codierformats enthält, in dem der Inhalt beim Transcodiersystem erhalten werden kann.

## Claims

1. Method for transcoding a content referenced by a first contents server (DMS1) connected to a network, the method being implemented by a transcoding system (SYST) connected to the network and distinct from the first contents server and comprising:
- a step of transmitting (B120, B220), subsequent to a transmission (B110, B210) via the network of a first announcement message signalling the absence in said network of the first contents server remaining active, a second announcement message signalling the presence in said network of a device substituting for the first contents server (DSS), forming a contents server, the substituting device being implemented in the transcoding system;
- a step of receiving (B130, B230), originating from a transmitting entity, a request for interrogating said substituting device (DSS),
- a step of transferring (B135) the interrogating request from the substituting device to said first contents server, the interrogating request aiming at obtaining metadata of a content, which include at least metadata relating to the coding formats in which the content may be obtained;
- a step of obtaining (B135, B235) a response from said first contents server comprising first metadata relating to at least one first coding format in which said content may be obtained from said first contents server,
- a step of analysing (B140) the first metadata obtained to determine at least one second coding format in which the content may be obtained and of generating second metadata relating to the second coding format, the second coding format being distinct from the first coding format; and
- a step of sending (B145, B245) a response to the transmitting entity comprising the first metadata and furthermore second metadata relating to at least one second coding format in which said content may be obtained from said transcoding system.

2. Method according to Claim 1 comprising a step (B150, B250) of triggering an execution of at least one transcoding function to generate, on the basis of said content coded in a said first coding format, a content transcoded in a said second coding format.

3. Method according to Claim 1 or 2, in which the second metadata comprise a second data file location address generated on the basis of a first data file location address extracted from the first metadata.

4. Method according to Claim 3, in which the second location address designates the transcoding system as an entity from which said content may be obtained in said second coding format and the first location address designates the first contents server as an entity from which said content may be obtained in said first coding format.

5. Transcoding method according to Claim 1, comprising a step (A100) of searching for a contents server present in said network and a step (B100) of transmitting a masking demand destined for at least one contents server found during the search step, the first announcement message being sent by the first contents server after reception of a said masking demand.

6. Transcoding method according to Claim 1, in which the first contents server is identified by a fixed address, the method comprising a step of transmitting a request to at least one contents server identified by a fixed address, the first announcement message being sent by the first contents server after reception of a said request.

7. Transcoding method according to Claim 1, in which the first announcement message is sent by the transcoding system subsequent to the reception (A200) of an announcement message announcing the presence in the network of said first contents server.

8. Transcoding method according to Claim 1, comprising a step of transmitting (B120, B220) through a network of a message relating to a description of at least one service implemented by said substituting device, said description including a description of the service or services implemented by said first contents server.

9. Transcoding method according to Claim 1, comprising a step (C110, C210) of implementing means for detecting the disappearance of said first contents server which are configured to detect an absence of reception, during a predefined time interval, of a message or of a response to a message signalling the presence of the first contents server.

10. Transcoding system configured to be connected to a network in which there is a first contents server distinct from the transcoding system, comprising
- a device substituting for the first contents server (DSS), forming a contents server;
- means for transmitting, subsequent to a transmitting via the network of a first announcement message indicating the absence in said network of the first contents server remaining active, a second announcement message signalling the presence in said network of the device substituting for said server (DSS), forming a contents server,
- means for receiving, originating from a transmitting entity, a request for interrogating said substituting device,
- means for transferring the interrogating request of the substituting device to said first contents server, the interrogating request aiming at obtaining metadata of a content, which include at least metadata relating to the coding formats in which the content may be obtained;
- means for obtaining a response from said first contents server comprising first metadata relating to at least one first coding format in which a content may be obtained from said first contents server,
- a transcoding module generating a content encoded in a second coding format from the content stored in the first contents server and second metadata relating to the second coding format, the second coding format being distinct from the first coding format;
- means for sending a response to the transmitting entity comprising the first metadata and furthermore second metadata relating to at least one second coding format in which said content may be obtained from said transcoding system.
